(19) Europäisches Patentamt
European Patent Office
Office européen des brevets

(11) **EP 3 046 302 A1**

(12) **EUROPEAN PATENT APPLICATION**
published in accordance with Art. 153(4) EPC

(43) Date of publication:
20.07.2016 Bulletin 2016/29

(21) Application number: 14843995.3

(22) Date of filing: 24.07.2014

(51) Int Cl.:
*H04L 27/36* (2006.01)          *H04B 1/04* (2006.01)
*H04L 27/20* (2006.01)

(86) International application number:
PCT/JP2014/069620

(87) International publication number:
WO 2015/037342 (19.03.2015 Gazette 2015/11)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 10.09.2013 JP 2013187067

(71) Applicant: Sony Corporation
Tokyo 108-0075 (JP)

(72) Inventor: WATANABE, Katsumi
Tokyo 108-0075 (JP)

(74) Representative: MFG Patentanwälte
Meyer-Wildhagen Meggle-Freund
Gerhard PartG mbB
Amalienstraße 62
80799 München (DE)

(54) **COMMUNICATION APPARATUS AND COMMUNICATION METHOD**

(57) [Object] To provide a communication device and communication method capable of realizing faster communication.

[Solution] A communication device includes a modulation unit configured to use, in each modulation scheme, symbol points for which an average power is the same across a predetermined plurality of modulation schemes, and modulate transmit data according to one of the predetermined plurality of modulation schemes.

FIG.1

**Description**

Technical Field

The present disclosure relates to a communication device and a communication method.

Background Art

Recently, wireless communication technologies that transmit and receive various data by close proximity wireless communication are being developed.

For example, TransferJet (registered trademark) has been adopted in devices such as digital cameras and personal computers (PCs) as a close proximity wireless communication scheme, and constructs an ecosystem for data communication between information processing devices. The TransferJet specifications are standardized by the TransferJet Consortium indicated in Non-Patent Literature 1 below, and PHY/CNL Specifications 1.0 is being used in current products.

In addition, as an international standard, a standard closely similar to the standard according to the TransferJet Consortium is being registered as ECMA-398 indicated in Non-Patent Literature 2 below.

Citation List

Non-Patent Literature

Non-Patent Literature 1: TransferJet Consortium (http://www.transferjet.org/)
Non-Patent Literature 2: ECMA-398 (http://www.ecma-international.org/publications/files/ECMA-ST/ECMA-398.pdf)

Summary of Invention

Technical Problem

However, because of the increasing file sizes and storage capacities as well as faster internal bus speeds connecting the central processing unit (CPU) and storage in current digital devices, even greater speed increases are expected from communication systems.

Accordingly, the present disclosure provides a new and improved communication device and communication method capable of realizing faster communication.

Solution to Problem

According to the present disclosure, there is provided a communication device including: a modulation unit configured to use, in each modulation scheme, symbol points for which an average power is the same across a predetermined plurality of modulation schemes, and modulate transmit data according to one of the predetermined plurality of modulation schemes.

According to the present disclosure, there is provided a communication method including: using, in each modulation scheme, symbol points for which an average power is the same across a predetermined plurality of modulation schemes, and modulating transmit data according to one of the predetermined plurality of modulation schemes.

Advantageous Effects of Invention

According to the present disclosure as described above, realizing faster communication is possible. Note that the above advantageous effect is not strictly limiting, and that any advantageous effect indicated in the present disclosure or another advantageous effect that may be reasoned from the present disclosure may also be exhibited in addition to, or instead of, the above advantageous effect.

Brief Description of Drawings

[FIG. 1] FIG. 1 is a block diagram illustrating a configuration of a communication device according to an embodiment of the present disclosure.

[FIG. 2] FIG. 2 is a block diagram illustrating a configuration of a communication device according to a comparative example.

[FIG. 3] FIG. 3 is a diagram illustrating the concept of pi/2-shifted BPSK in the conventional scheme.

[FIG. 4] FIG. 4 is a diagram illustrating 16-QAM symbol point mapping according to the present embodiment.

[FIG. 5] FIG. 5 is a diagram illustrating QPSK symbol point mapping according to the present embodiment.

[FIG. 6] FIG. 6 is a diagram illustrating BPSK symbol point mapping according to the present embodiment.

[FIG. 7] FIG. 7 is a diagram illustrating a baseband waveform used by a communication device according to the present embodiment.

[FIG. 8] FIG. 8 is a block diagram illustrating a configuration of a communication device according to the present embodiment.

[FIG. 9] FIG. 9 is a diagram illustrating a PSDU frame format of the conventional scheme.

[FIG. 10] FIG. 10 is a diagram illustrating a PSDU frame format according to the present embodiment.

[FIG. 11] FIG. 11 is a diagram illustrating an internal configuration of a pilot sequence insertion unit according to the present embodiment.

[FIG. 12] FIG. 12 is a diagram illustrating an internal configuration of an LFSR according to the present embodiment.

[FIG. 13] FIG. 13 is a diagram illustrating an internal configuration of a pilot sequence insertion unit according to a reference configuration.

[FIG. 14] FIG. 14 is a conceptual diagram illustrating BER performance of the conventional scheme and the proposed scheme.

[FIG. 15] FIG. 15 is a flowchart illustrating operation of a communication device according to the present embodiment.

Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Hereinafter, the description will proceed in the following order.

1. Overview of communication device according to embodiment of present disclosure
2. Embodiment

    2-1. Configuration of communication module
    2-2. Configuration of transmit data generation module
    2-3. Operational process

3. Conclusion

<1. Overview of communication device according to embodiment of present disclosure>

A communication device according to an embodiment of the present disclosure conducts a communication process that improves upon the communication process prescribed by the TransferJet Consortium (Non-Patent Literature 1) and in ECMA-398 (Non-Patent Literature 2). Hereinafter, the communication process prescribed by the TransferJet Consortium (Non-Patent Literature 1) and in ECMA-398 (Non-Patent Literature 2) will be predetermined the conventional scheme, while the improved communication process in the present embodiment will be predetermined the proposed scheme.

In a communication device according to the present embodiment, the transmit signal is converted to a multi-level signal to realize high-speed transmission. More specifically, the communication device according to the present embodiment adopts 16-quadrature amplitude modulation (16-QAM) and quadrature phase shift keying (QPSK) in addition to the pi2-shifted binary phase shift keying (BPSK) adopted in the conventional scheme. When the modulation scheme is 16-QAM, the PHY rate, which had a maximum of 560 Mbps in the conventional scheme, reaches a maximum of four times that rate, or 2240 Mbps.

However, various problems may occur as a result of adopting 16-QAM and QPSK. Accordingly, the communication device according to the present embodiment resolves each problem with the following method.

First, fluctuations occur in the power of the signal within a frame due to multi-leveling. However, since TransferJet is a low-power radio standard with a prescribed instantaneous maximum power, power equalization of the signal within a frame is necessary. Accordingly, the communication device according to the present embodiment conducts power equalization by signal point (symbol point) mapping. In this case, since it is not necessary to control the transmission amplifier, power savings and smaller circuitry are realized.

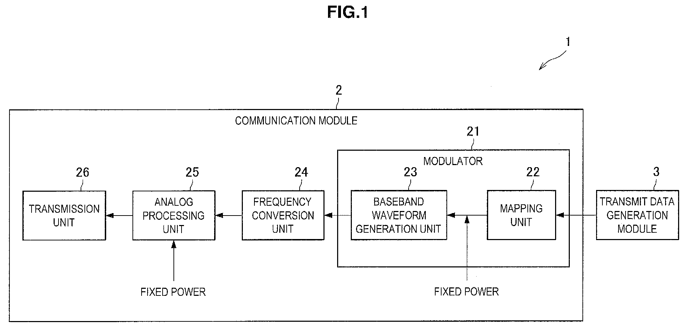

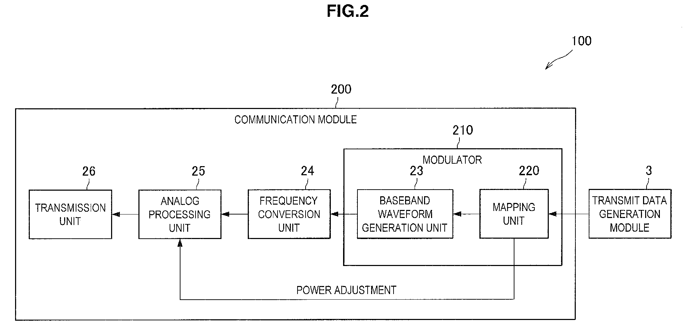

At this point, FIGS. 1 and 2 will be referenced to describe in detail the power equalization by symbol point mapping in the communication device 1 according to the present embodiment. Specifically, the communication device 1 according to the present embodiment, which conducts power equalization by symbol point mapping, will be compared to a communication device 100 according to a comparative example, which conducts power equalization by amplification level control with a transmission amplifier.

FIG. 1 is a block diagram illustrating a configuration of the communication device 1 according to an embodiment of the present disclosure. FIG. 2 is a block diagram illustrating a configuration of the communication device 100 according to a comparative example. Since the structural elements included in the communication device 1 illustrated in FIG. 1 will be described in detail later, description will be omitted at this point. The communication device 100 according to the comparative example includes a modulator 210 that includes a mapping unit 220 which is different from the communication device 1 according to the present embodiment. Note that both the mapping unit 22 and the mapping unit 220 are taken to conduct mapping using multiple modulation schemes according to 16-QAM, QPSK, and pi2-shifted BPSK.

With the communication device 100 according to the comparative example, in the mapping unit 220, mapping is conducted so that the symbol point mapping reaches a maximum. For this reason, as illustrated in FIG. 2, when making the transmit power fixed, it has been necessary to adjust the output according to each modulation scheme by adjusting the power of a transmission amplifier included in an analog processing unit 225. In contrast, with the communication device 1 according to the present embodiment, mapping is conducted to adjust the symbol mapping by the mapping unit 22 so that the average power becomes the same. For this reason, with the communication device 1 according to the present embodiment, as illustrated in FIG. 1, it is not necessary to adjust the output of the transmission amplifier included in an analog processing unit 25 according to each modulation scheme. For this reason, with the communication device 1 according to the present embodiment, in the transmission amplifier included in the analog processing unit 25, the transmit signal may be amplified by a fixed power.

The above thus describes the power equalization by symbol point mapping in the communication device 1 according to the present embodiment.

Second, the signal-to-noise ratio (SNR) degrades due to multi-leveling. For this reason, the communication device 1 according to the present embodiment conducts coding with low-density parity-check (LDPC) codes.

Third, the received error vector magnitude (EVM) degrades due to multi-leveling. For this reason, the communication device 1 according to the present embodiment inserts a pilot sequence for equalization before and after the PHY service data unit (PSDU) in a transmit frame.

Furthermore, in order to improve the frame utilization efficiency, the communication device 1 according to the present embodiment shortens the preamble and mounts two or more CNL service data units (CSDUs).

The communication device 1 according to the present embodiment may improve the received SNR by adopting such a proposed scheme. By providing an extra surplus of received SNR, the communication device 1 according to the present embodiment enables more stable communication while also securing a margin against performance degradation due to individual inconsistencies during mass production.

The above thus describes an overview of the communication device according to an embodiment of the present disclosure. Next, an embodiment of the present disclosure will be described in detail.

<2. Embodiment>

As illustrated in FIG. 1, the communication device according to an embodiment of the present disclosure includes a communication module 2 and a transmit data generation module 3. Hereinafter, first, FIGS. 1 to 7 will be referenced to described a configuration of the communication module 2 according to an embodiment of the present disclosure.

[2-1. Configuration of communication module]

As illustrated in FIG. 1, the communication module 2 includes a modulator 21, a mapping unit 22, a baseband waveform generation unit 23, a frequency conversion unit 24, an analog processing unit 25, and a transmission unit 26.

(Modulator 21: Modulator)

The modulator 21 includes a function of modulating binary transmit data output from the transmit data generation module 3 into an electrical signal. Specifically, the modulator 21 functions as the mapping unit 22 and the baseband waveform generation unit 23.

(Mapping unit 22: 16-QAM/QPSK/pi2-shifted BPSK Mapper)

The mapping unit 22 maps binary transmit data output from the transmit data generation module 3 to symbol points on the complex plane. Table 1 below summarizes the symbol point mapping by the mapping unit 22 described in detail hereinafter.

[Table 1]

| Modulation scheme | Average power | Types of symbol point sets | Combinations |
|---|---|---|---|
| 16-QAM | 10<br>=4*(2<br>+10+10+18)/16 | 1 type<br>  FIG 4 | 1 type |
| QPSK | 10<br>=4*10/4 | 2 types (A, B)<br>  A: FIG 5A<br>  B: FIG 5B | 1. Continuously transmit either A or B<br>2. Alternately transmit A and B |
| BPSK | 10<br>=2*10/2 | 4 types (A, B, C, D)<br>  A: FIG 6A<br>  B: FIG 6B<br>  C: FIG 6C<br>  D: FIG 6D | 1. Continuously transmit either A or B<br>2. Alternately transmit A and B<br>3. Transmit either C or D<br>4. Alternately transmit C and D |

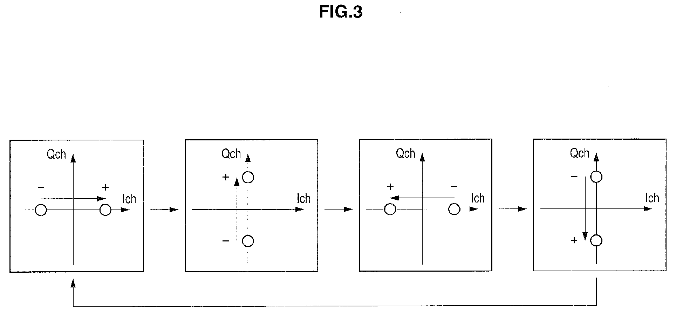

Hereinafter, symbol point mapping by the mapping unit 22 will be described. First, FIG. 3 will be referenced to describe symbol point mapping in pi/2-shifted BPSK according to the conventional scheme.

FIG. 3 is an explanatory diagram illustrating the concept of pi/2-shifted BPSK in the conventional scheme. As illustrated in FIG. 3, pi/2-shifted BPSK is characterized by rotating the transmission axis by 90 degrees (pi/2) for every one symbol to transmit. Such a rotation operation produces characteristics wherein the signal envelope no longer passes through the origin of the complex plane during a symbol transition, and the difficulty of designing the transmission amplifier is lessened.

Herein, the communication device according to the present embodiment adopts 16-QAM and QPSK in addition to the pi2-shifted BPSK adopted in the conventional scheme, and thereby attempts to increase the transmission speed. However, fluctuations occur in the power of the signal within a frame due to multi-leveling. Accordingly, the communication device according to the present embodiment conducts power equalization of the signal within a frame by using symbol point mapping by the mapping unit 22.

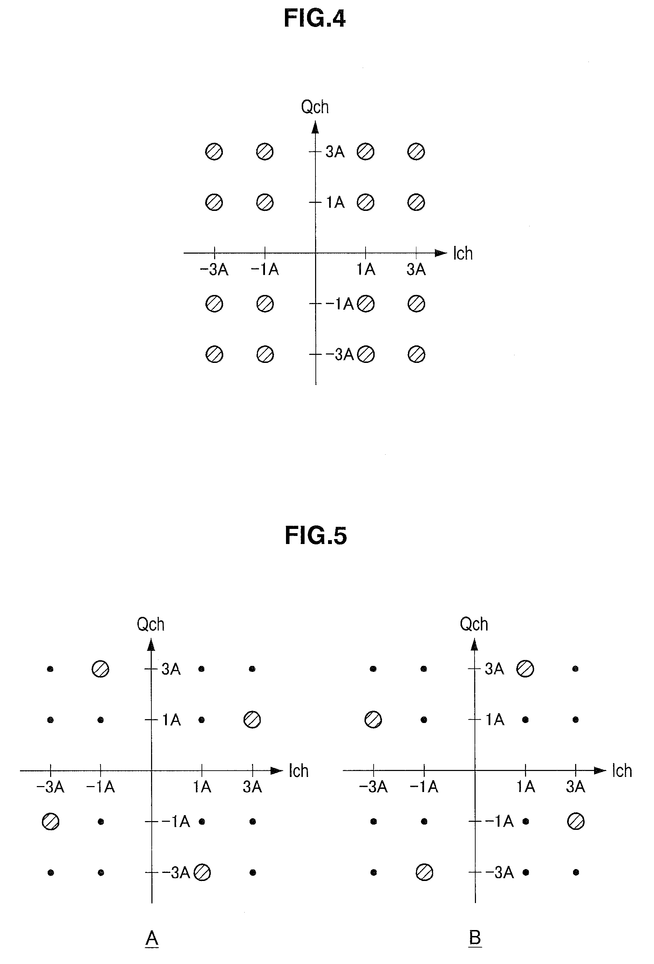

In other words, the mapping unit 22 according to the present embodiment functions as a modulation unit that uses, in each modulation scheme, symbol points for which the average power is the same across a predetermined plurality of modulation schemes, and modulates transmit data according to one of the predetermined plurality of modulation schemes. The mapping unit 22 conducts modulation according to at least any of 16-QAM, QPSK, and BPSK as the predetermined plurality of modulation schemes. The mapping unit 22 modulates using symbol points in 16-QAM in all of the plurality of modulation schemes. Hereinafter, FIG. 4 will be referenced to describe symbol points in 16-QAM.

FIG. 4 is a diagram illustrating 16-QAM symbol point mapping according to the present embodiment. As illustrated in FIG. 4, in 16-QAM, symbol points are mapped to (A+jA), (A+j3A), (3A+jA), (3A+j3A), (A-jA), (A-j3A), (3A-jA), (3A-j3A), (-A+jA), (-A+j3A), (-3A+jA), (-3A+j3A), (-A-jA), (-A-j3A), (-3A-jA), and (-3A-j3A). Herein, A is an arbitrary value indicating the normalized amplitude of the transmit power. Table 2 below indicates the power of each symbol point in 16-QAM illustrated in FIG. 4.

[Table 2]

| $18A^2$ | $10A^2$ | $j3A$ | $10A^2$ | $18A^2$ |
|---|---|---|---|---|
| $10A^2$ | $2A^2$ | $j1A$ | $2A^2$ | $10A^2$ |
| $-3A$ | $-1A$ | $0$ | $1A$ | $3A$ |
| $10A^2$ | $2A^2$ | $-j1A$ | $2A^2$ | $10A^2$ |
| $18A^2$ | $10A^2$ | $-j3A$ | $10A^2$ | $18A^2$ |

As illustrated in Table 2, for example, the power of the symbol point (A+jA) is $2A^2$, while the power of the symbol point (3A+j3A) is $18A^2$. As illustrated in Table 2, the average power of each symbol point in 16-QAM is $4 \times (2A^2+10A^2+10A^2+18A^2)/16=10A^2$.

Herein, as illustrated in Table 2, the power of the eight symbol points (A+j3A), (-A-j3A), (-3A+jA), (3A-jA), (-A+j3A), (A-j3A), (3A+jA), and (-3A-jA) is $10A^2$, the same as the average power. In a modulation scheme other than 16-QAM, the mapping unit 22 modulates using these symbol points, which have the same power as the average power of 16-QAM. In QPSK and BPSK, since the mapping unit 22 maps using only symbol points have a power of $10A^2$, the average power obviously is also $10A^2$. Thus, in 16-QAM, QPSK, and BPSK, the average power of the symbol points becomes the same. Hereinafter, first, FIG. 5 will be referenced to describe symbol point mapping in QPSK.

FIG. 5 is a diagram illustrating QPSK symbol point mapping according to the present embodiment. In QPSK, there are two possible symbol point mappings that yield an average power of $10A^2$, as illustrated in FIGS. 5A and 5B. The symbol point mapping A (first symbol point set) illustrated in FIG. 5A includes the symbol points (3A+jA), (-A+j3A), (-3A-jA), and (A-j3A). The symbol point mapping B (second symbol point set) illustrated in FIG. 5B includes the symbol points (A+j3A), (-3A+jA), (-A-j3A), and (3A-jA). When the modulation scheme is QPSK, the mapping unit 22 modulates using at least one of these two symbol point mappings.

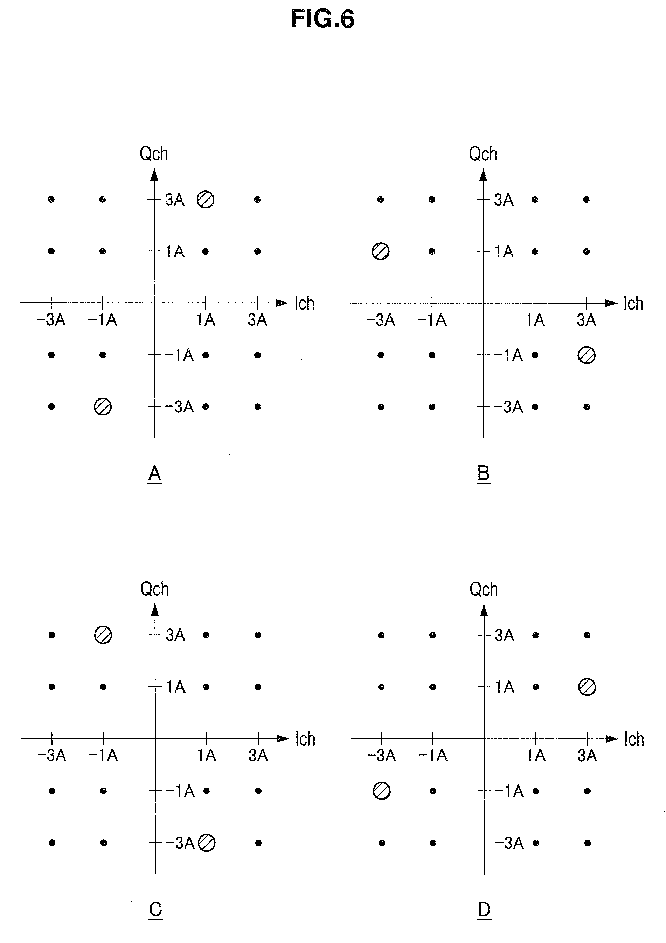

In further detail, the mapping unit 22 modulates by alternating between the symbol point mapping A and the symbol point mapping B every one symbol. In other words, the mapping unit 22 conducts modulation while rotating the transmission axis for every one symbol to transmit. According to such a rotation operation, the signal envelope no longer passes through the origin of the complex plane during a symbol transition, and the difficulty of designing the transmission amplifier is lessened. Note that the mapping unit 22 may also continuously use either the symbol point mapping A or the symbol point mapping B. Next, FIG. 6 will be referenced to describe symbol point mapping in QPSK.

FIG. 6 is a diagram illustrating BPSK symbol point mapping according to the present embodiment. In BPSK, there are four possible symbol point mappings that yield an average power of $10A^2$, as illustrated in FIGS. 6A, 6B, 6C, and 6D. The symbol point mapping A (third symbol point set) illustrated in FIG. 6A includes the symbol points (A+j3A) and (-A-j3A). The symbol point mapping B (fourth symbol point set) illustrated in FIG. 6B includes the symbol points (-3A+jA) and (3A-jA). The symbol point mapping C (fifth symbol point set) illustrated in FIG. 6C includes the symbol points (-A+j3A) and (A-j3A). The symbol point mapping D (sixth symbol point set) illustrated in FIG. 6D includes the symbol points (3A+jA) and (-3A-jA). When the modulation scheme is BPSK, the mapping unit 22 modulates using at least one of these four symbol point mappings.

Herein, the combination of the symbol point mappings A and B as well as the combination of the symbol point mappings C and D are each a combination offset by 90 degrees. However, for other combinations, such as the combination of the symbol point mappings A and C or the combination of the symbol point mappings A and D, the offset is 90 degrees or less, and are thus considered to have little significance from the perspective of symbol point design.

Thus, the mapping unit 22 modulates by alternating between the symbol point mapping A and the symbol point mapping B every one symbol, or by alternating between the symbol point mapping C and the symbol point mapping D every one symbol. In other words, the mapping unit 22 conducts modulation while rotating the transmission axis 90 degrees for every one symbol to transmit. According to such a rotation operation, the signal envelope no longer passes through the origin of the complex plane during a symbol transition, and the difficulty of designing the transmission amplifier is lessened. Furthermore, as discussed earlier, since modulation is conducted by BPSK while rotating the transmission axis 90 degrees similarly to the conventional scheme, the communication device 1 according to the present embodiment is able to guarantee compatibility with the conventional scheme. Note that the mapping unit 22 may also modulate by continuously using one of the symbol point mappings A, B, C, and D.

The foregoing thus describes symbol point mapping by the mapping unit 22. The mapping unit 22 outputs the complex sequence obtained by mapping binary transmit data output from the transmit data generation module 3 onto the complex plane to the baseband waveform generation unit 23.

- Supplemental remarks

In the present embodiment, since there were symbol points having the same power as the average power of 16-QAM, the average power could also be made the same in QPSK and BPSK. The modulator 21 may adopt another modulation scheme such as 64-QAM or 256-QAM, but in another modulation scheme, cases in which there are no symbol points having the same power as the average power are also conceivable. In such cases, the modulator 21 may make the average power the same in each modulation scheme by using approximate symbols or an ordinary high-resolution digital-to-analog converter (DAC).

(Baseband waveform generation unit 23: Baseband Waveform Generator)

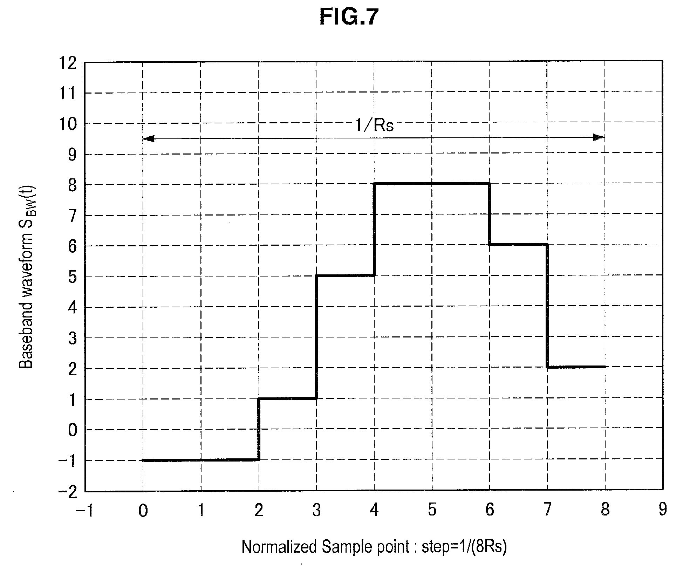

The baseband waveform generation unit 23 includes a function of generating a baseband waveform on the basis of a sequence output from the mapping unit 22. The baseband waveform generation unit 23 according to the present embodiment generates a baseband waveform using the waveform illustrated in FIG. 7, which has been used in the conventional scheme. FIG. 7 is a diagram illustrating a baseband waveform used by the communication device 1 according to the present embodiment. As illustrated in FIG. 7, the period of the waveform is expressed by eight normalized samples indicated along the horizontal axis, and is the inverse 1/Rs of the symbol rate Rs. Note that Table 3 below illustrates the amplitude values of the transmit waveform illustrated in FIG. 7.

[Table 3]

| Normalized Sample point: step=1/(8Rs) | Amplitude value |
| --- | --- |
| 0 | -1 |
| 1 | -1 |
| 2 | 1 |
| 3 | 5 |
| 4 | 8 |
| 5 | 8 |
| 6 | 6 |
| 7 | 2 |

The baseband waveform generation unit 23 outputs the generated baseband waveform to the frequency conversion unit 24.

(Frequency conversion unit 24: Upconverter)

The frequency conversion unit 24 includes a function of converting the frequency of the signal to be transmitted that was output from the modulator 21. For example, the frequency conversion unit 24 conducts frequency conversion treating the center frequency as 4.48 GHz, in accordance with the TransferJet standard. The frequency conversion unit 24 outputs the frequency-converted signal to be transmitted to the analog processing unit 25.

(Analog processing unit 25: BPF, Amp, & SW)

The analog processing unit 25 includes a function of conducting various signal processing on a signal to be transmitted that was output from the frequency conversion unit 24. For example, the analog processing unit 25 includes a transmission amplifier (TxAmp), and amplifies the signal to be transmitted that was output from the frequency conversion unit 24. At this point, as discussed earlier, since mapping is performed in the mapping unit 22 so that the average power is the same in any of 16-QAM, QPSK, and BPSK, the transmission amplifier does not need to adjust the amplification level according to the modulation scheme. In other words, the transmission amplifier amplifies by a fixed power, regardless of the modulation scheme. Otherwise, the analog processing unit 25 may also include a band-pass filter (BPF) and an antenna switch (SW). The analog processing unit 25 outputs the signal obtained by conducting this various signal processing to the transmission unit 26.

(Transmission unit 26: Coupler)

The transmission unit 26 includes a function of transmitting the transmit signal (transmit data) output from the analog processing unit 25 by close proximity wireless communication. For example, the transmission unit 26 is made up of an inductive coupler, and conducts close proximity wireless communication with external equipment in accordance with the TransferJet standard. In further detail, the transmission unit 26 conducts close proximity wireless communication with another communication device (a communication device equipped with close proximity wireless communication functions) present within a predetermined communication range from the transmission unit 26. At this point, close proximity wireless communication between the transmission unit 26 and the other communication device becomes possible only when the transmission unit 26 and the other communication device are in a state of close proximity to each other. Herein, a state of close proximity means a state of being in close proximity or in contact in which the distance between the transmission unit 26 and the other communication device is within a predetermined range (3 cm, for example).

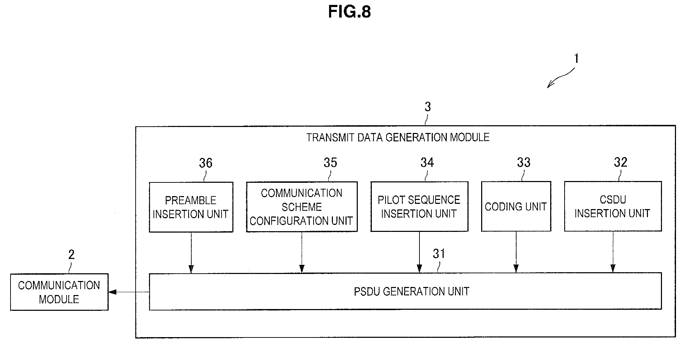

The above thus describes a configuration of the communication module 2 according to the present embodiment. Next, FIGS. 8 to 14 will be referenced to describe a configuration of the transmit data generation module 3.

[2-2. Configuration of transmit data generation module 3]

FIG. 8 is a block diagram illustrating a configuration of the communication device 1 according to the present embodiment. As illustrated in FIG. 8, the transmit data generation module 3 includes a PSDU generation unit 31, a CSDU insertion unit 32, a coding unit 33, a pilot sequence insertion unit 34, a communication scheme configuration unit 35, and a preamble insertion unit 36. The transmit data generation module 3 generates a PSDU as transmit data, and outputs to the communication module 2.

(PSDU generation unit 31)

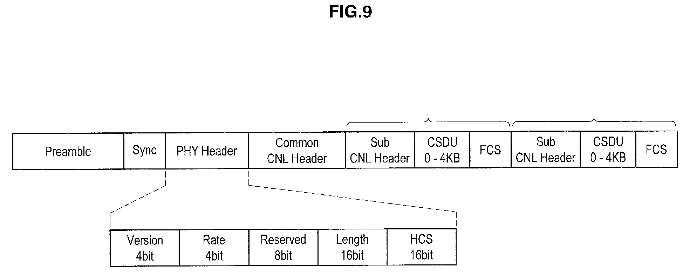

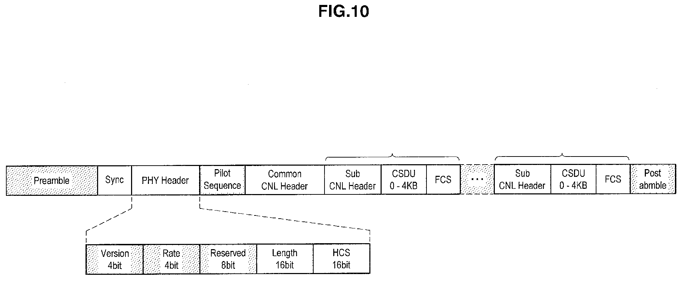

The PSDU generation unit 31 includes a function of generating transmit data (PSDU) to output to the communication module 2. In further detail, the PSDU generation unit 31 generates the portion of the PSDU which is unchanged from the conventional scheme, and combines this portion with the portion related to the proposed scheme output or the like from the CSDU insertion unit 32 and the like discussed later to generate the PSDU. Note that the PSDU generation unit 31 may also generate a PSDU of the conventional scheme, and the CSDU insertion unit 32 and the like may modify a portion thereof to thereby generate a PSDU according to the proposed scheme. Hereinafter, FIGS. 9 and 10 will be referenced to describe the PSDU frame format in the conventional scheme and the present embodiment.

FIG. 9 is a diagram illustrating a PSDU frame format of the conventional scheme. As illustrated in FIG. 9, the PSDU of the conventional scheme is made up of a Preamble, Sync, and PHY header, followed by the PHY payload. The PHY payload includes a common CNL header, and two sets of a Sub CNL header, a CSDU from 0 KB to 4 KB, and a frame check sequence (FCS). Also, as illustrated in FIG. 9, the PHY header includes a 4-bit field (Version) stating the version information of the communication scheme, a 4-bit field (Rate) stating the communication rate, an 8-bit reserved field (Reserved), a 16-bit field (Length) stating information about the length of the PSDU, and a 16-bit field (HCS) stating a header check sequence for the PHY header.

FIG. 10 is a diagram illustrating a PSDU frame format according to the present embodiment. In FIG. 10, the portions of the PSDU frame format according to the present embodiment which are different from the conventional scheme are shaded with hatching. As illustrated in FIG. 10, in the proposed scheme, modifications are made to the Preamble, the Version field, the Rate field, and the Reserved field. Additionally, a Pilot Sequence and a Postamble are added. Furthermore, the number of sets of the Sub CNL Header, CSDU, and FCS is increased. A detailed description of these portions which are different from the conventional scheme will be given together with the description of the CSDU insertion unit 32, the coding unit 33, the pilot sequence insertion unit 34, the communication scheme configuration unit 35, or the preamble insertion unit 36.

(CSDU insertion unit 32)

The CSDU insertion unit 32 includes a function of inserting two or more connection layer service data units (CSDUs) into the physical layer service data unit (PSDU). The CSDU insertion unit 32, by inserting two or more CSDUs into the PSDU, is able to reduce the amount of overhead needed to transmit a certain number of CSDUs, and increase throughput.

In the Common CNL Header illustrated in FIGS. 9 and 10, the transmit UID, the receive UID, the Revision, information indicating the number of CSDUs, and the like are stored. The transmit data is managed in sets of the Sub CNL Header, CSDU (maximum 4 KB), and FCS every 4 KB, and in the conventional regulation, the maximum number of CSDUs is 2. In the present embodiment, the CSDU insertion unit 32 is capable of setting the number of CSDUs in the Common CNL Header to 2 or more.

At this point, the upper limit on the length of the PSDU in the conventional scheme was the length that could be expressed with the 16 bits of the Length field in the PHY Header. In the present embodiment, since the number of CSDUs may become 2 or more, the 8 bits of the Reserved field are newly used as the Length. Consequently, the upper limit on the length of the PSDU is extended, enabling support for up to a maximum length of 24 bits.

(Coding unit 33)

The coding unit 33 includes a function of coding the transmit data with LDPC codes. The coding unit 33 conducts coding using the parity check matrix of LDPC codes illustrated in Table 4 below. As illustrated in Table 4, the coding unit 33 uses code rates expressed as 14/15, 13/15, and 11/15. By conducting coding with LDPC codes, the coding unit 33 is able to compensate the SNR required by multi-leveling. Note that the coding unit 33 may also code the transmit data with Reed-Solomon codes or Viterbi codes, which have been used in the conventional scheme.

[Table 4]

| code rate | 14/15 | 13/15 | 11/15 |
|---|---|---|---|
| information block length. $k$ (bits) | 1344 | 1248 | 1056 |
| parity length (bits) | 96 | 192 | 384 |
| matrix elements whose values are '1' in the first 15 columns of parity check matrix H | $h_{0,0}\ h_{1,0}\ h_{4,0}$ | $h_{0,0}\ h_{1,0}\ h_{100,0}$ | $h_{0,0}\ h_{193,0}\ h_{100,0}$ |
| | $h_{32,1}\ h_{34,1}\ h_{39,1}$ | $h_{128,1}\ h_{34,1}\ h_{135,1}$ | $h_{34,1}\ h_{128,1}\ h_{327,1}$ |
| | $h_{64,2}\ h_{70,2}\ h_{78,2}$ | $h_{64,2}\ h_{70,2}\ h_{174,2}$ | $h_{256,2}\ h_{70,2}\ h_{366,2}$ |
| | $h_{8,3}\ h_{18,3}\ h_{95,3}$ | $h_{8,3}\ h_{114,3}\ h_{191,3}$ | $h_{200,3}\ h_{306,3}\ h_{191,3}$ |
| | $h_{31,4}\ h_{42,4}\ h_{54,4}$ | $h_{127,4}\ h_{42,4}\ h_{54,4}$ | $h_{42,4}\ h_{246,4}\ h_{127,4}$ |
| | $h_{63,5}\ h_{76,5}\ h_{91,5}$ | $h_{159,5}\ h_{172,5}\ h_{91,5}$ | $h_{91,5}\ h_{351,5}\ h_{172,5}$ |
| | $h_{14,6}\ h_{45,6}\ h_{94,6}$ | $h_{110,6}\ h_{45,6}\ h_{94,6}$ | $h_{45,6}\ h_{286,6}\ h_{302,6}$ |
| | $h_{30,7}\ h_{47,7}\ h_{83,7}$ | $h_{126,7}\ h_{143,7}\ h_{83,7}$ | $h_{275,7}\ h_{126,7}\ h_{335,7}$ |
| | $h_{17,8}\ h_{62,8}\ h_{80,8}$ | $h_{17,8}\ h_{158,8}\ h_{80,8}$ | $h_{17,8}\ h_{272,8}\ h_{158,8}$ |
| | $h_{28,9}\ h_{43,9}\ h_{82,9}$ | $h_{28,9}\ h_{144,9}\ h_{178,9}$ | $h_{28,9}\ h_{144,9}\ h_{370,9}$ |
| | $h_{22,10}\ h_{60,10}\ h_{81,10}$ | $h_{22,10}\ h_{60,10}\ h_{177,10}$ | $h_{22,10}\ h_{252,10}\ h_{369,10}$ |
| | $h_{27,11}\ h_{49,11}\ h_{84,11}$ | $h_{27,11}\ h_{145,11}\ h_{180,11}$ | $h_{219,11}\ h_{145,11}\ h_{372,11}$ |
| | $h_{7,12}\ h_{53,12}\ h_{77,12}$ | $h_{7,12}\ h_{53,12}\ h_{173,12}$ | $h_{7,12}\ h_{245,12}\ h_{173,12}$ |
| | $h_{19,13}\ h_{44,13}\ h_{85,13}$ | $h_{19,13}\ h_{140,13}\ h_{181,13}$ | $h_{19,13}\ h_{140,13}\ h_{373,13}$ |
| | $h_{6,14}\ h_{46,14}\ h_{75,14}$ | $h_{6,14}\ h_{46,14}\ h_{171,14}$ | $h_{6,14}\ h_{238,14}\ h_{363,14}$ |

(Pilot sequence insertion unit 34)

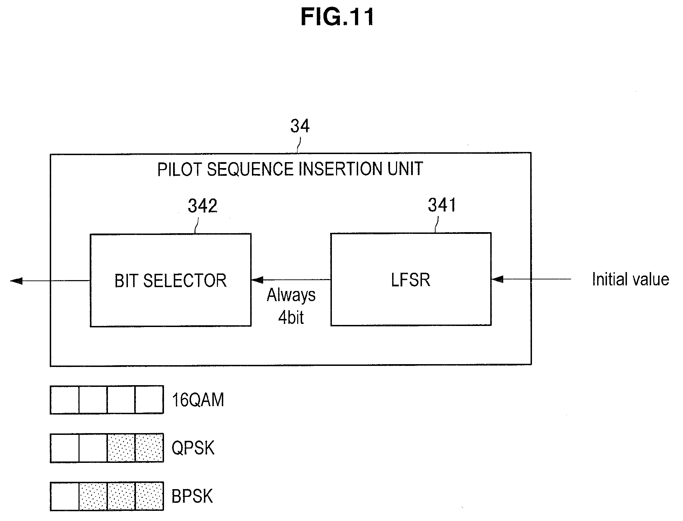

The pilot sequence insertion unit 34 includes a function of inserting a pilot sequence into the transmit data. In further detail, as illustrated in FIG. 10, the pilot sequence insertion unit 34 performs the insertion of the Pilot Sequence and the Postamble so as to bracket the portion from the Common CNL Header to the end of the packet. By having the pilot sequence insertion unit 34 insert a pilot sequence into the transmit frame, the receiving side becomes able to easily realize signal processing with an equalizer or the like, and thus the received SNR required by multi-leveling such as 16-QAM may be improved. Note that the Pilot Sequence and the Postamble are modulated according to the modulation scheme stated in the Rate field of the PHY Header. Hereinafter, FIG. 11 will be referenced to describe an internal configuration of the pilot sequence insertion unit 34.

FIG. 11 is a diagram illustrating an internal configuration of the pilot sequence insertion unit 34 according to the present embodiment. As illustrated in FIG. 11, the pilot sequence insertion unit 34 includes a linear feedback shift register (LFSR) 341 and a bit selector 342.

- LFSR 341

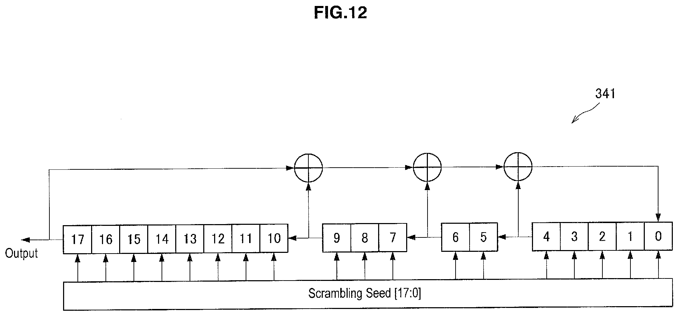

The LFSR 341 functions as a scrambling sequence generator that generates a scrambling sequence for spread spectrum. The scrambling sequence generated by the LFSR 341 is used for spread spectrum of the transmit signal in both the conventional scheme and the present embodiment. In the present embodiment, the scrambling sequence generated by the LFSR 341 is reused for the generation of the pilot sequence by the pilot sequence insertion unit 34. Hereinafter, FIG. 12 will be referenced to describe the LFSR 341 in detail.

FIG. 12 is a diagram illustrating an internal configuration of the LFSR 341 according to the present embodiment. As illustrated in FIG. 12, the LFSR 341 generates a random binary sequence called an M-sequence, on the basis of a generator polynomial expressed by Expression 1 below.

[Math. 1]

$$G(x) = x^{18} + x^{10} + x^7 + x^5 + 1 \qquad \text{(Expression 1)}$$

Note that in the conventional scheme, the inverted XOR of the scrambling sequence obtained by the LFSR and the transmit signal is computed across the entire packet including preamble, header, and payload, and the result is treated as the final transmit signal. Likewise, in the present embodiment, the communication device 1 computes the inverted XOR of the scrambling sequence and the transmit signal across the entire packet, and treats the result as the final transmit signal.

- Bit selector 342

The bit selector 342 includes a function of selecting, from the scrambling sequence generated by the LFSR 341, a number of bits equal to the number of bits per one symbol in the modulation scheme used by the modulator 21, and treating the selected bits as a pilot sequence. The number of bits per one symbol is 4 in the case of 16-QAM, 2 in the case of QPSK, and 1 in the case of BPSK. Accordingly, supposing that the scrambling sequence generator 341 always generates a 4-bit sequence as illustrated in FIG. 11, the bit selector 342 selects all 4 bits when the modulation scheme is 16-QAM, 2 bits in the case of QPSK, and 1 bit in the case of BPSK. Although FIG. 11 illustrates an example in which the bit selector 342 selects the 2 bits of the first half in the case of QPSK and the leading bit in the case of BPSK, bits may also be selected from another arbitrary position. The scrambling sequence selected by the bit selector 342 becomes the Pilot Sequence or the Postamble.

- Supplemental remarks

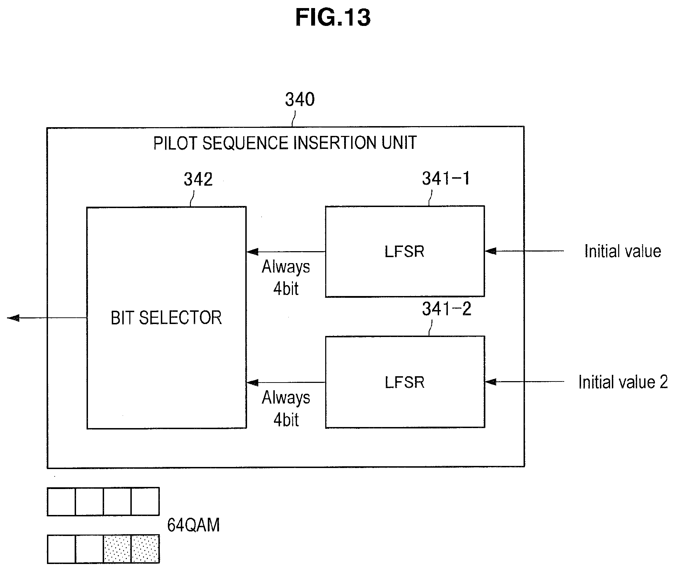

As discussed earlier, the modulator 21 may also adopt 64-QAM, 256-QAM, or the like as the modulation scheme. At this point, an internal configuration of the pilot sequence insertion unit in the case of the modulator 21 adopting 64-QAM will be described as a reference configuration with reference to FIG. 13.

FIG. 13 is a diagram illustrating an internal configuration of a pilot sequence insertion unit 340 according to a reference configuration. Since the number of bits per one symbol is 6 bits in 64-QAM, the bit selector 342 needs to select 6 bits. Accordingly, as illustrated in FIG. 13, the pilot sequence insertion unit 34 generates a 6-bit random-number symbol by using two LFSRs 341 that each output a 4-bit sequence. Specifically, the bit selector 342 generates a 6-bit random-number symbol by selecting the 4 bits output from the LFSR 341-1 and 2 bits from among the 4 bits output from the LFSR 341-2. At this point, when selecting 2 bits, the bit selector 342 is taken to select the 2 bits of the first half, similarly to the case of QPSK. Also, the initial values used in the LFSRs 341-1 and 341-2 are assumed to be different.

(Communication scheme configuration unit 35)

The communication scheme configuration unit 35 includes a function of configuring, in the PSDU, information for reporting the communication scheme to the receiving side. Specifically, the communication scheme configuration unit 35 configures information indicating the communication scheme in the Rate field and the Version field of the PHY Header.

- Regarding the Rate field

In the Rate field, the communication scheme configuration unit 35 configures information indicating the modulation scheme and the transmission rate (any value from 0x1 to 0xA). Table 5 illustrates combinations of a modulation scheme and a transmission rate adopted by the communication device 1 according to the present embodiment.

[Table 5]

| Name | Rate 4bit | Modulation | Chip Rate | Symbol Rate | PHY Rate | Data Rate | Coding |
|---|---|---|---|---|---|---|---|
| Rate2088 | 0xA | 16QAM | 560 | 560 | 2240 | 2088 | LDPC(14/15) |
| Rate 1641 | 0x9 | 16QAM | 560 | 560 | 2240 | 1641 | LDPC(11/15) |
| Rate1044 | 0x8 | QPSK | 560 | 560 | 1120 | 1044 | LDPC(14/15) |
| Rate820 | 0x7 | QPSK | 560 | 560 | 1120 | 820 | LDPC(11/15) |
| Rate410 | 0x6 | Pi/2 shift BPSK | 560 | 280 | 560 | 410 | LDPC(14/15) |
| Rate522 | 0x5 | Pi/2 shift BPSK | 560 | 280 | 560 | 522 | RS |
| Rate261 | 0x4 | Pi/2 shift BPSK | 560 | 280 | 560 | 261 | RS + Viterbi |
| Rate130 | 0x3 | Pi/2 shift BPSK | 560 | 280 | 280 | 130 | RS + Viterbi |
| Rate65 | 0x2 | Pi/2 shift BPSK | 560 | 280 | 140 | 65 | RS + Viterbi |
| Rate32 | 0x1 | Pi/2 shift BPSK | 560 | 280 | 70 | 32 | RS + Viterbi |
| PHY Header | | Pi/2 shift BPSK | 560 | 280 | 35 | 16 | Viterbi |

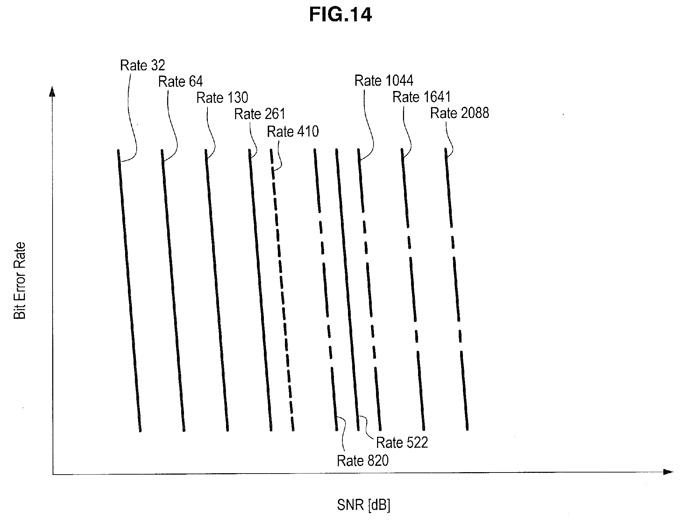

Rate32 to Rate522 in Table 5 are combinations of a modulation scheme and a transmission rate in the conventional scheme. In addition to these, the communication device 1 according to the present embodiment newly adopts the five rates of Rate2088, Rate1641, Rate1044, Rate820, and Rate410 as the proposed scheme using LDPC codes and QPSK or 16-QAM. Along with the above, the communication scheme configuration unit 35 assigns the numbers from 0x6 to 0xA, which were not used in the conventional scheme, to the five new rates.
Next, FIG. 14 will be referenced to describe the performance of the conventional scheme and the proposed scheme illustrated in Table 5.
FIG. 14 is a conceptual diagram illustrating bit error rate (BER) performance of the conventional scheme and the proposed scheme. Since the present embodiment guarantees backward compatibility, the receiving side is also capable of demodulating signals modulated according to the conventional scheme. In the conventional scheme and the present embodiment, the transmitting side is always capable of transmitting at a free transmission rate. Generally, the transmitting side decides the transmission rate by using an algorithm that raises the transmission rate when the SNR on the receiving side is high, and lowers the transmission rate when the SNR on the receiving side is low. The communication device 1 according to the present embodiment likewise adopts such an algorithm, starting with Rate32, next switching to Rate65, and so on, raising the transmission rate in order from the bottom to the top of Table 5 according to the communication conditions. At this point, as illustrated in FIG. 14, Rate522 of the conventional scheme requires more energy to achieve a similar BER as Rate820 according to the proposed scheme, thus demonstrating that Rate522 has lower performance compared to Rate820. Accordingly, when communicating with a terminal capable of communication according to the proposed scheme, the communication device 1 according to the present embodiment skips Rate522 and uses Rate410 after Rate261. Consequently, the communication device 1 according to the present embodiment is able to adjust the transmission rate efficiently.

- Regarding the Version field

The communication scheme configuration unit 35 configures the value "0x2" in the Version field (4 bits) in the PHY Header. Since the value "0x1" is used in the conventional scheme, the receiving side is able to distinguish between communication according to the conventional scheme and communication according to the proposed scheme. Note that the communication device 1 is also able to apply the conventional scheme to the communication module 2 and apply the present embodiment to the transmit data generation module 3. Specifically, the communication device 1 configures "0x2" in the Version from Rate32 to Rate522, inserts two or more CSDUs and a pilot sequence, and also transmits a PSDU frame having a shortened Preamble. Note that even if the packet has a Version of "0x2", or in other words, even if the modulation scheme by the modulator 21 is 16-QAM or QPSK, the Preamble, Sync, and PHY Header illustrated in FIG. 10 are taken to be modulated by pi/2-shifted BPSK. On the other hand, the data from the Pilot Sequence to the Postamble is modulated according to the modulation scheme stated in the Rate field.

(Preamble insertion unit 36)

The preamble insertion unit 36 includes a function of inserting a preamble of a length from 7.28 us to 0 us into the PSDU. The preamble insertion unit 36 shortens the length of the 7.28 us preamble from the conventional scheme. The preamble insertion unit 36 is able to freely configure the length from 7.28 us to 0 us. Consequently, the length of the overall PSDU is shortened, and thus the transmission speed may be increased. Furthermore, by shortening the length of the preamble, the frame utilization efficiency improves, and throughput improves. Note that the preamble is used for gain adjustment on the receiving side as a preparatory signal prior to receiving. Since the transmit power is small for close proximity wireless communication such as TransferJet, the lead-in time for gain adjustment may be shortened, and as a result, the preamble may be shortened.

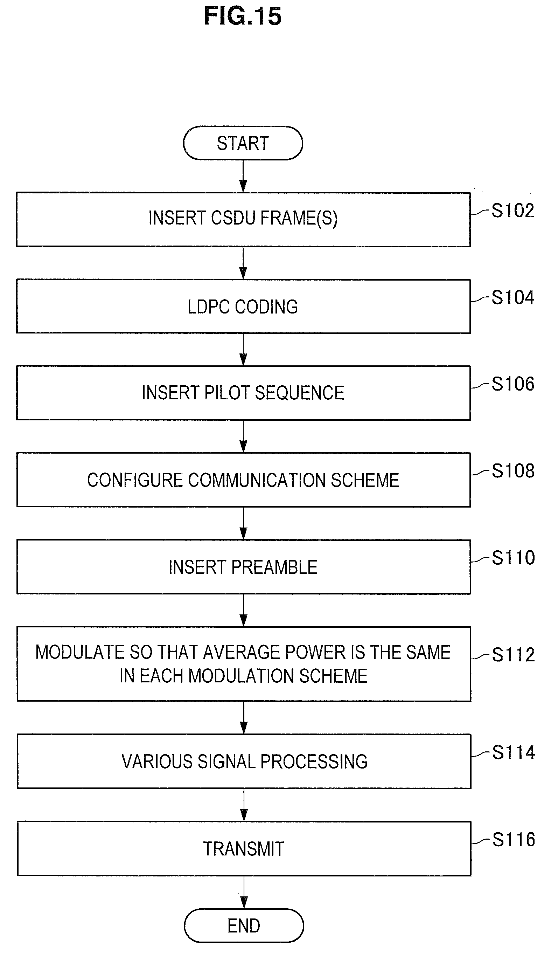

The above thus describes a configuration of the transmit data generation module 3 according to the present embodiment. Next, FIG. 15 will be referenced to describe an operational process of the communication device 1.

[2-3. Operational process]

FIG. 15 is a flowchart illustrating operation of the communication device 1 according to the present embodiment. As illustrated in FIG. 15, first, in step S102, the communication device 1 inserts the CSDU frame. In further detail, the CSDU insertion unit 32 inserts the CSDU into the PSDU generated by the PSDU generation unit 31. At this point, the CSDU insertion unit 32 may insert two or more CSDUs.

Next, in step S104, the communication device 1 conducts LDPC coding. In further detail, the coding unit 33 conducts LDPC coding on the transmit data using any of the parity check matrix illustrated in Table 4 above.

Next, in step S106, the communication device 1 inserts a pilot sequence. In further detail, the pilot sequence insertion unit 34 performs the insertion of the Pilot Sequence and the Postamble so as to bracket the portion from the Common CNL Header to the end of the packet.

Next, in step S108, the communication device 1 configures the communication scheme. In further detail, the communication scheme configuration unit 35 configures information indicating the communication scheme in the Rate field and the Version field of the PHY Header.

Next, in step S110, the communication device 1 inserts a preamble. In further detail, the preamble insertion unit 36 inserts a preamble of a length from 7.28 us to 0 us into the PSDU.

Next, in step S112, the communication device 1 modulates the transmit data so that the average power in each modulation scheme becomes the same. In further detail, first, the mapping unit 22 maps binary transmit data output from the transmit data generation module 3 to symbol points on the complex plane. At this point, the mapping unit 22 maps symbol points in each modulation scheme so that the average power becomes the same among 16-QAM, QPSK, or BPSK. More specifically, the mapping unit 22 uses the symbol point mappings illustrated in FIG. 4 in the case of 16-QAM, FIG. 5 in the case of QPSK, and FIG. 6 in the case of BPSK, respectively. Next, the baseband waveform generation unit 23 generates a baseband waveform using the waveform illustrated in FIG. 7, on the basis of a sequence output from the mapping unit 22.

Next, in step S114, the communication device 1 performs various signal processing on the transmit signal. In further detail, the frequency conversion unit 24 performs frequency conversion on the transmit signal, while the analog processing unit 25 amplifies the frequency-converted transmit signal, applies a band-pass filter, and the like. In the above step S112, since mapping is performed so that the average power is the same in any of 16-QAM, QPSK, and BPSK, the transmission amplifier included in the analog processing unit 25 amplifies the transmit signal by a fixed power.

Subsequently, in step S118, the communication device 1 transmits the transmit signal. In further detail, the transmission unit 26 transmits the transmit signal output from the analog processing unit 25 by close proximity wireless communication.

The above thus describes an operational process of the communication device 1 according to the present embodiment.

<3. Conclusion>

As described above, the communication device 1 according to the present embodiment is able to realize faster transmission by converting the transmit signal to a multi-level signal. In addition, by conducting power equalization with symbol point mappings against the inconsistencies in signal power within a frame produced by multi-leveling, the communication device 1 is able to realize amplification by a fixed power in the transmission amplifier, and eliminate the need for control of the amplification level. Furthermore, by adopting various communication schemes that improve the received SNR and the received EVM, the communication device 1 according to the present embodiment enables more stable communication while also securing a margin against performance degradation due to individual inconsistencies during mass production.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the foregoing embodiment, the communication device 1 is described as conducting close proximity wireless communication conforming to the TransferJet standard, but the present technology is not limited to such an example. For example, the communication device 1 may also communicate with external equipment by Bluetooth (registered trademark), ZigBee (registered trademark), Ultra-wideband (UWB), or the like.

Additionally, it is possible to create a computer program for causing hardware such as a CPU, ROM, and RAM built into an information processing device to exhibit functions similar to each structural element of the above communication device 1. Also, a recording medium having such a computer program recorded thereon is also provided.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.

(1) A communication device including:

a modulation unit configured to use, in each modulation scheme, symbol points for which an average power is the same across a predetermined plurality of modulation schemes, and modulate transmit data according to one of the predetermined plurality of modulation schemes.

(2) The communication device according to (1), wherein
the modulation unit modulates using symbol points in 16-QAM in any of the predetermined plurality of modulation schemes, and in a modulation scheme other than 16-QAM, modulates using symbol points having the same power as the average power of 16-QAM.

(3) The communication device according to (1) or (2), wherein
the predetermined plurality of modulation schemes includes at least one of 16-QAM, QPSK, and BPSK.

(4) The communication device according to (3), wherein
in a case in which the modulation scheme is QPSK, the modulation unit modulates using at least one of a first symbol point set including the symbol points (3A+jA), (-A+j3A), (-3A-jA), and (A-j3A), and a second symbol point set including the symbol points (A+j3A), (-3A+jA), (-A-j3A), and (3A-jA).

(5) The communication device according to (3) or (4), wherein
in a case in which the modulation scheme is BPSK, the modulation unit modulates using at least one of a third symbol point set including the symbol points (A+j3A) and (-A-j3A), a fourth symbol point set including the symbol points (-3A+jA) and (3A-jA), a fifth symbol point set including the symbol points (-A+j3A) and (A-j3A), and a sixth symbol point set including the symbol points (3A+jA) and (-3A-jA).

(6) The communication device according to (4), wherein
the modulation unit modulates by alternately using the first symbol point set and the second symbol point set.

(7) The communication device according to (5), wherein
the modulation unit modulates by alternately using the third symbol point set and the fourth symbol point set, or by alternately using the fifth symbol point set and the sixth symbol point set.

(8) The communication device according to any one of (1) to (7), further including:

a transmission unit configured to transmit the transmit data by close proximity wireless communication.

(9) The communication device according to any one of (1) to (8), further including:

a coding unit configured to code the transmit data with an LDPC code.

(10) The communication device according to any one of (1) to (9), further including:

a scrambling sequence generator configured to generate a scrambling sequence for spread spectrum; and
a pilot sequence insertion unit configured to insert a pilot sequence into the transmit data, wherein
the pilot sequence insertion unit selects, from the scrambling sequence generated by the scrambling sequence
generator, a number of bits equal to a number of bits per one symbol in the modulation scheme used by the
modulation unit, and treats the selected bits as the pilot sequence.

(11) The communication device according to any one of (1) to (10), further incuding:

a CSDU insertion unit configured to insert two or more connection layer service data units (CSDUs) into a
physical layer service data unit (PSDU).

(12) The communication device according to any one of (1) to (11), further including:

a preamble insertion unit configured to insert a preamble of a length from 7.28 us to 0 us into the transmit data.

(13) A communication method including:

using, in each modulation scheme, symbol points for which an average power is the same across a predetermined
plurality of modulation schemes, and modulating transmit data according to one of the predetermined plurality
of modulation schemes.

Reference Signs List

| | |
|---|---|
| 1 | communication device |
| 2 | communication module |
| 21 | modulator |
| 22 | mapping unit |
| 23 | baseband waveform generation unit |
| 24 | frequency conversion unit |
| 25 | analog processing unit |
| 26 | transmission unit |
| 3 | transmit data generation module |
| 31 | PSDU generation unit |
| 32 | CSDU insertion unit |
| 33 | coding unit |
| 34 | pilot sequence insertion unit |
| 341 | LFSR |
| 342 | bit selector |
| 35 | communication scheme configuration unit |
| 36 | preamble insertion unit |

**Claims**

1. A communication device comprising:

a modulation unit configured to use, in each modulation scheme, symbol points for which an average power is
the same across a predetermined plurality of modulation schemes, and modulate transmit data according to
one of the predetermined plurality of modulation schemes.

**2.** The communication device according to claim 1, wherein
the modulation unit modulates using symbol points in 16-QAM in any of the predetermined plurality of modulation schemes, and in a modulation scheme other than 16-QAM, modulates using symbol points having the same power as the average power of 16-QAM.

**3.** The communication device according to claim 1, wherein
the predetermined plurality of modulation schemes includes at least one of 16-QAM, QPSK, and BPSK.

**4.** The communication device according to claim 3, wherein
in a case in which the modulation scheme is QPSK, the modulation unit modulates using at least one of a first symbol point set including the symbol points (3A+jA), (-A+j3A), (-3A-jA), and (A-j3A), and a second symbol point set including the symbol points (A+j3A), (-3A+jA), (-A-j3A), and (3A-jA).

**5.** The communication device according to claim 3, wherein
in a case in which the modulation scheme is BPSK, the modulation unit modulates using at least one of a third symbol point set including the symbol points (A+j3A) and (-A-j3A), a fourth symbol point set including the symbol points (-3A+jA) and (3A-jA), a fifth symbol point set including the symbol points (-A+j3A) and (A-j3A), and a sixth symbol point set including the symbol points (3A+jA) and (-3A-jA).

**6.** The communication device according to claim 4, wherein
the modulation unit modulates by alternately using the first symbol point set and the second symbol point set.

**7.** The communication device according to claim 5, wherein
the modulation unit modulates by alternately using the third symbol point set and the fourth symbol point set, or by alternately using the fifth symbol point set and the sixth symbol point set.

**8.** The communication device according to claim 1, further comprising:

a transmission unit configured to transmit the transmit data by close proximity wireless communication.

**9.** The communication device according to claim 1, further comprising:

a coding unit configured to code the transmit data with an LDPC code.

**10.** The communication device according to claim 1, further comprising:

a scrambling sequence generator configured to generate a scrambling sequence for spread spectrum; and
a pilot sequence insertion unit configured to insert a pilot sequence into the transmit data, wherein
the pilot sequence insertion unit selects, from the scrambling sequence generated by the scrambling sequence generator, a number of bits equal to a number of bits per one symbol in the modulation scheme used by the modulation unit, and treats the selected bits as the pilot sequence.

**11.** The communication device according to claim 1, further comprising:

a CSDU insertion unit configured to insert two or more connection layer service data units (CSDUs) into a physical layer service data unit (PSDU).

**12.** The communication device according to claim 1, further comprising:

a preamble insertion unit configured to insert a preamble of a length from 7.28 us to 0 us into the transmit data.

**13.** A communication method comprising:

using, in each modulation scheme, symbol points for which an average power is the same across a predetermined plurality of modulation schemes, and modulating transmit data according to one of the predetermined plurality of modulation schemes.

FIG.1

**FIG.2**

100

200

COMMUNICATION MODULE

210

MODULATOR

| 26 | 25 | 24 | 23 | 220 | 3 |
|---|---|---|---|---|---|
| TRANSMISSION UNIT | ANALOG PROCESSING UNIT | FREQUENCY CONVERSION UNIT | BASEBAND WAVEFORM GENERATION UNIT | MAPPING UNIT | TRANSMIT DATA GENERATION MODULE |

POWER ADJUSTMENT

**FIG.3**

# FIG.4

# FIG.5

A

B

# FIG.6

# FIG.7

**FIG.8**

1

3

TRANSMIT DATA GENERATION MODULE

| 36 | 35 | 34 | 33 | 32 |
|---|---|---|---|---|
| PREAMBLE INSERTION UNIT | COMMUNICATION SCHEME CONFIGURATION UNIT | PILOT SEQUENCE INSERTION UNIT | CODING UNIT | CSDU INSERTION UNIT |

31

2

COMMUNICATION MODULE

PSDU GENERATION UNIT

**FIG.9**

| Preamble | Sync | PHY Header | Common CNL Header | Sub CNL Header | CSDU 0 - 4KB | FCS | Sub CNL Header | CSDU 0 - 4KB | FCS |
|---|---|---|---|---|---|---|---|---|---|

| Version 4bit | Rate 4bit | Reserved 8bit | Length 16bit | HCS 16bit |
|---|---|---|---|---|

**FIG.10**

| Preamble | Sync | PHY Header | Pilot Sequence | Common CNL Header | Sub CNL Header | CSDU 0 - 4KB | FCS | ... | Sub CNL Header | CSDU 0 - 4KB | FCS | Post abmble |

| Version 4bit | Rate 4bit | Reserved 8bit | Length 16bit | HCS 16bit |

# FIG.11

34

## PILOT SEQUENCE INSERTION UNIT

342

341

| BIT SELECTOR | Always 4bit | LFSR | Initial value |

16QAM

QPSK

BPSK

**FIG.12**

# FIG.13

340

PILOT SEQUENCE INSERTION UNIT

342

341-1

BIT SELECTOR

LFSR ← Initial value

Always
4bit

341-2

LFSR ← Initial value 2

Always
4bit

64QAM

## FIG.14

# FIG.15

```
          ┌─────────────┐
          │    START    │
          └─────────────┘
                 │
                 ▼
   ┌───────────────────────────────┐
   │      INSERT CSDU FRAME(S)      │──S102
   └───────────────────────────────┘
                 │
                 ▼
   ┌───────────────────────────────┐
   │          LDPC CODING          │──S104
   └───────────────────────────────┘
                 │
                 ▼
   ┌───────────────────────────────┐
   │      INSERT PILOT SEQUENCE     │──S106
   └───────────────────────────────┘
                 │
                 ▼
   ┌───────────────────────────────┐
   │  CONFIGURE COMMUNICATION SCHEME │──S108
   └───────────────────────────────┘
                 │
                 ▼
   ┌───────────────────────────────┐
   │        INSERT PREAMBLE         │──S110
   └───────────────────────────────┘
                 │
                 ▼
   ┌───────────────────────────────────────┐
   │ MODULATE SO THAT AVERAGE POWER IS THE  │──S112
   │ SAME IN EACH MODULATION SCHEME         │
   └───────────────────────────────────────┘
                 │
                 ▼
   ┌───────────────────────────────┐
   │     VARIOUS SIGNAL PROCESSING  │──S114
   └───────────────────────────────┘
                 │
                 ▼
   ┌───────────────────────────────┐
   │           TRANSMIT             │──S116
   └───────────────────────────────┘
                 │
                 ▼
          ┌─────────────┐
          │     END     │
          └─────────────┘
```

## INTERNATIONAL SEARCH REPORT

| International application No. |
| --- |
| PCT/JP2014/069620 |

**A. CLASSIFICATION OF SUBJECT MATTER**
*H04L27/36*(2006.01)i, *H04B1/04*(2006.01)i, *H04L27/20*(2006.01)i

According to International Patent Classification (IPC) or to both national classification and IPC

**B. FIELDS SEARCHED**

Minimum documentation searched (classification system followed by classification symbols)
H04L27/36, H04B1/04, H04L27/20

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)
IEEE Xplore, CiNii

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2003-78579 A  (Alcatel),<br>14 March 2003 (14.03.2003),<br>fig. 3, 4; paragraphs [0026] to [0031], [0041]<br>to [0042]<br>& US 2003/0012298 A1    & EP 1274183 A1 | 1-4,9-13<br>5-8 |
| Y | JP 2002-290246 A  (Hitachi Kokusai Electric<br>Inc.),<br>04 October 2002 (04.10.2002),<br>fig. 6, 8; paragraphs [0012] to [0014]<br>& US 2002/0142732 A1 | 5,7 |
| Y | JP 2008-227586 A  (Toshiba Corp.),<br>25 September 2008 (25.09.2008),<br>fig. 3, 4; paragraphs [0016] to [0018]<br>& US 2009/0003488 A1     & CN 101267412 A | 6,7 |

| [X] Further documents are listed in the continuation of Box C. | [ ] See patent family annex. |
| --- | --- |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>10 October, 2014 (10.10.14) | Date of mailing of the international search report<br>21 October, 2014 (21.10.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/069620

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-139283 A (Sony Corp.),<br>14 July 2011 (14.07.2011),<br>fig. 1; paragraphs [0021] to [0034]<br>& US 2011/0156852 A1 & CN 102111191 A | 8 |
| A | JP 9-116589 A (Nippon Telegraph and Telephone Corp.),<br>02 May 1997 (02.05.1997),<br>abstract<br>(Family: none) | 1-13 |
| A | JP 4-208741 A (Director General of Technical Research and Development Institute of Defense Agency),<br>30 July 1992 (30.07.1992),<br>claims; fig. 1<br>(Family: none) | 1-13 |
| A | JP 11-17761 A (Sony Corp.),<br>22 January 1999 (22.01.1999),<br>fig. 2 to 5; paragraphs [0027] to [0030]<br>& US 6243423 B1 & EP 887976 A2<br>& CN 1216419 A | 1-13 |

Form PCT/ISA/210 (continuation of second sheet) (July 2009)